Europäisches Patentamt

European Patent Office

Office européen des brevets

(19)

(11) Veröffentlichungsnummer : **0 122 541**
**B1**

(12) **EUROPÄISCHE PATENTSCHRIFT**

(45) Veröffentlichungstag der Patentschrift :
04.03.87

(51) Int. Cl.⁴ : **H 02 M 3/155**

(21) Anmeldenummer : **84103710.4**

(22) Anmeldetag : **04.04.84**

(54) **Stromversorgungsschaltung.**

(30) Priorität : **13.04.83 DE 3313272**

(43) Veröffentlichungstag der Anmeldung :
**24.10.84 Patentblatt 84/43**

(45) Bekanntmachung des Hinweises auf die Patenterteilung : **04.03.87 Patentblatt 87/10**

(84) Benannte Vertragsstaaten :
**BE DE FR GB IT NL**

(56) Entgegenhaltungen :
**DE-A- 2 007 694**
**US-A- 3 641 422**

(73) Patentinhaber : **International Standard Electric Corporation**
**320 Park Avenue**
**New York New York 10022 (US)**
**BE FR GB IT NL**
**Standard Elektrik Lorenz Aktiengesellschaft**
**Hellmuth-Hirth-Strasse 42**
**D-7000 Stuttgart 40 (DE)**
**DE**

(72) Erfinder : **Reh, Klaus**
**Panoramastrasse 18**
**D-7321 Albershausen (DE)**
Erfinder : **Schultz, Jürgen**
**Schauinsland 39**
**D-7307 Aichwald (DE)**

(74) Vertreter : **Pohl, Heribert, Dipl.-Ing et al**
**Standard Elektrik Lorenz AG Patent- und Lizenzwesen**
**Kurze Strasse 8 Postfach 300 929**
**D-7000 Stuttgart 30 (DE)**

## Beschreibung

Die Erfindung betrifft eine getaktete Speiseschaltung zur Stromversorgung eines elektrischen Verbrauchers nach dem Oberbegriff des Patentanspruchs.

Viele elektrische Verbraucher benötigen Betriebsspannungen, die nicht direkt dem Netz oder einer Batterie entnommen werden können. Außerdem ist weder das Netz noch eine Batterie eine ideale Quelle, deren Ausgangsspannung zeit- und lastunabhängig ist. Weiter schwankt in der Regel der Leistungsbedarf eines Verbrauchers während des Betriebs zwischen einem geringsten und einem höchsten Wert.

Bei getakteten Speiseschaltungen wird die Leistungsaufnahme eines Verbrauchers durch Aus- und Einschalten so geregelt, daß im zeitlichen Mittel die erforderliche Leistungsaufnahme erfolgt. Die zeitliche Mittelung erfolgt durch Speicherelemente, die im Verbraucher selbst oder in der Speiseschaltung enthalten sind. Derartige Speicher sind z. B. die Induktivität eines induktiven Bauelements. Die Verlustleistung im Schalter einer getakteten Speiseschaltung ist wesentlich geringer als die bei Einsatz eines Regelwiderstands. Bei vorgegebener Schalthäufigkeit ist die Verlustleistung im wesentlichen dem zu schaltenden Strom proportional.

Üblicherweise wird der gesamte, am Ausgang der Speiseschaltung zur Verfügung zu stellende Strom geschaltet und führt zu entsprechend hohen Verlusten.

Aus der DE-A-2 007 694 ist ein Spannungsregelgerät mit schaltendem Stellglied, einer Speicherdrossel und einer Freilaufdiode bekannt. Parallel zu diesem schaltenden Stellglied ist ein stetig arbeitendes Stellglied geschaltet, dem eine derartige Steuerspannung zugeführt wird, daß es bei etwa konstanter Belastung des Spannungsregelgerätes nicht stromführend ist. Jede plötzlich ansteigende Belastung wird von dem stetig arbeitenden Stellglied sofort ausgeregelt.

Aus W. Oppelt : Kleines Handbuch technischer Regelvorgänge, 5. Auflage, 1972, Seite 594, zweiter Absatz, ist es bekannt, bei Zweipunktregelvorgängen einem Grundlastzweig einen Regler parallel zu schalten, der nur die Spitzenlast zu- oder abschaltet.

Der Erfindung liegt die Aufgabe zugrunde, für eine Speiseschaltung nach dem Oberbegriff des Patentanspruchs eine einfache Schaltung bei einem bestimmten Anwendungsfall anzugeben, um die Verlustleistung weiter zu senken.

Die Aufgabe wird durch die kennzeichnenden Merkmale des Patentanspruchs gelöst.

Im folgenden wird die Erfindung anhand zweier Ausführungsbeispiele unter Zuhilfenahme der beiliegenden Zeichnung weiter erläutert.

Figur 1 zeigt das Schaltbild einer Speiseschaltung zur Stromversorgung eines Fernsehempfangsgeräts einschließlich eines Teils der Horizontalablenkschaltung.

Figur 2 zeigt einige Strom- und Spannungsverläufe für die Schaltung nach Fig. 1.

Figur 3 zeigt eine weitere Speiseschaltung für ein Fernsehempfangsgerät.

Figur 4 zeigt einige Spannungsverläufe für die Schaltung nach Fig. 3.

Von einer Gleichspannungsquelle 1 mit parallel geschaltetem Speicherkondensator 2 führt ein erster Strompfad über eine erste Diode 3 und eine Speisespule 5 zu einem Verbraucher 6. Am Verbindungspunkt von erster Diode 3 und Speisespule 5 ist ein nach Masse führender Integrationskondensator 4 angeschlossen. Die Gleichspannungsquelle 1 kann ein, gegebenenfalls über einen Transformator, am Netz angeschlossener Gleichrichter oder eine Batterie sein. Als Verbraucher 6 ist der Horizontalablenkteil eines Fernsehempfangsgeräts skizziert, aus dem üblicherweise auch die übrigen im Fernsehempfangsgerät benötigten Spannungen gewonnen werden. Gleiches gilt für Monitore und Sichtgeräte. Dargestellt ist die Parallelschaltung aus einem Ablenkschalter 7, einem Rücklaufkondensator 8 und der Reihenschaltung aus einer Ablenkspule 9 und einem Serienkondensator 10. Ein zweiter Strompfad führt an der ersten Diode 3 vorbei und durchläuft, von der Gleichspannungsquelle 1 kommend, zunächst eine Speicherdrossel 11 und anschließend eine zweite Diode 12 und vereinigt sich in der Speisespule 5 wieder mit dem ersten Strompfad. Der Verbindungspunkt von Speicherdrossel 11 und zweiter Diode 12 ist über einen steuerbaren Halbleiterschalter 13 mit Masse verbunden.

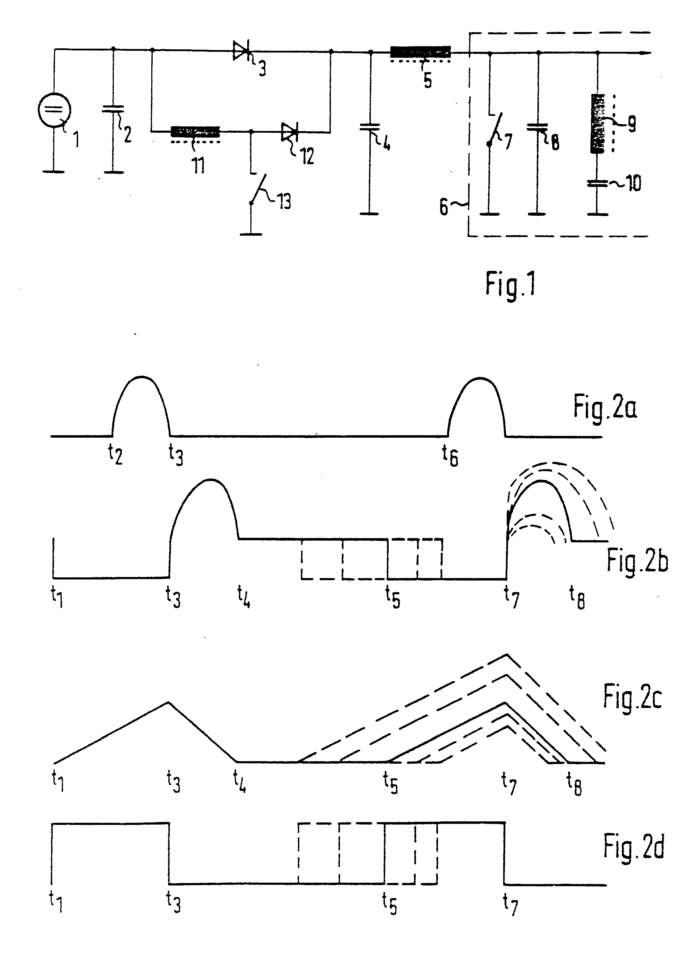

Die Wirkungsweise der Schaltung nach Fig. 1 wird anhand von Spannungs- und Stromverläufen, die in Fig. 2 dargestellt sind, erläutert. Dargestellt ist ein sich über zwei Zeilenablenkperioden erstreckender Zeitraum. Mit t1 bis t8 sind verschiedene Zeitpunkte der beiden Perioden bezeichnet. In der ersten Periode wird von Mittelwerten ausgegangen, d. h. von einer mittleren Höhe der Spannung an der Gleichspannungsquelle 1 und von einer mittleren Stromaufnahme des Verbrauchers 6. In der zweiten Periode sind Abweichungen skizziert, die sich durch Änderungen in der Höhe der Eingangs-Gleichspannung oder des Verbraucherstroms ergeben. Fig. 2d zeigt die Steuerspannung für den Halbleiterschalter 13, beispielsweise die Basis-Emitter-Spannung eines Transistors. Vom Zeitpunkt t1 bis zum Zeitpunkt t3 und vom Zeitpunkt t5 bis zum Zeitpunkt t7 ist der Halbleiterschalter 13 geschlossen. Während dieser Zeit liegt an der Speicherdrossel 11 die volle Spannung der Gleichspannungsquelle 1 an. Der in Fig. 2c dargestellte Strom durch die Speicherdrossel 11 steigt deshalb in diesen Zeitabschnitten linear an. Wird der Halbleiterschalter 13 abgeschaltet, so hört der Stromfluß in der Speicherdrossel 11 nicht auf, sondern fließt über die zweite Diode 12 weiter und nimmt dabei wieder stetig ab, bis die in der Speicherdrossel 11 enthaltene magnetische

Energie wieder abgebaut ist, was zum Zeitpunkt t4 der Fall ist. Es fließt dann kein Strom mehr durch die Speicherdrossel 11. Fig. 2b zeigt den Spannungsverlauf am Halbleiterschalter 13. Dieser ist bis zum Zeitpunkt t3 geschlossen, die Spannung an ihm ist während dieser Zeit sehr gering und entspricht seiner Durchlaßspannung. Bei geöffnetem Halbleiterschalter 13 ist die an ihm anliegende Spannung gleich der am Integrationskondensator 4 (zuzüglich der Durchlaßspannung der zweiten Diode 12). Ist der Integrationskondensator 4 sehr groß, so ändert sich die an ihm anliegende Spannung nur sehr langsam, beispielsweise während der Dauer eines Halbbildes. Die Ausregelung der Folgen von Helligkeitsschwankungen ist entsprechend langsam. Dies ist besonders dann von Nachteil, wenn aufeinanderfolgende Zeilen stark in der Helligkeit schwanken, was bei Textwiedergabe die Regel ist. Ein sehr kleiner Integrationskondensator 4 führt zu sehr schnellen Spannungsänderungen und zu hohen Spannungen, die den Halbleiterschalter 13 gefährden können. Zweckmäßig wird der Integrationskondensator 4 so groß gewählt, daß sich, zusammen mit der Speisespule 5, eine Zeitkonstante ergibt, die etwas kleiner als eine Horizontalablenkperiode ist. Wird der Halbleiterschalter 13 zum Zeitpunkt t3 geöffnet, so springt die Spannung an ihm zunächst auf die Spannung am Integrationskondensator 4, die zu diesem Zeitpunkt gleich der der Gleichspannungsquelle 1 ist, steigt anschließend weiter stark an und geht dann wieder zurück. Während dieser Zeit sperrt die erste Diode 3. Die Spannung der Gleichspannungsquelle 1 ist zum Zeitpunkt t4 wieder erreicht, wenn durch die Speicherdrossel 11 kein Strom mehr fließt. Sie bleibt erhalten, bis der Halbleiterschalter 13 zum Zeitpunkt t5 wieder geschlossen wird. Fig. 2a zeigt die Spannung am Ablenkschalter 7. Dieser ist bis zum Zeitpunkt t2 geschlossen, die Speisespule 5 wird aufgeladen. Zum Zeitpunkt t2 bis zum Zeitpunkt t3 ist der Ablenkschalter 7 geöffnet, die Speisespule 5 wird entladen. Beim Schließen des Ablenkschalters 7 zum Zeitpunkt t3 wird der Halbleiterschalter 13 wieder geöffnet. Die in der Speicherdrossel 11 gespeicherte Energie dient jetzt dazu, die Speisespule 5 zusätzlich momentan höher aufzuladen, wobei die Grundladung der Speisespule 5 über die Diode 3 erfolgt.

Dadurch, daß nur ein Teil des Stromes geregelt wird, ist die Verlustleistung im Halbleiterschalter 13 verhältnismäßig gering, die Speicherdrossel 11 kann sehr klein sein. Wie in der zweiten Periode von Fig. 2 dargestellt, kann der Einschaltzeitpunkt t5 des Halbleiterschalters 13 in einem weiten Bereich geregelt werden. Von t5 = t4 bis t5 = t7 kann der gesamte Regelbereich ausgenützt werden, da auch bei ständig ausgeschaltetem Halbleiterschalter 13 (t5 = t7) über die erste Diode 3 noch die Grundenergie zugeführt wird. Auf diese Weise ist auch ein einfaches Anschwingen der Schaltung ohne zusätzliche Bauelemente möglich.

Die Regelgröße zur Regelung des Einschaltzeitpunktes t5 des Halbleiterschalters 13 kann aus jedem beliebigen Spannungs- oder Stromwert des angeschlossenen Verbrauchers 6 abgeleitet werden. Die Regelung kann deshalb so erfolgen, daß gerade diejenige Spannung konstant gehalten wird, bei der sich eine Änderung am ungünstigsten auswirkt, beispielsweise als Veränderung der Bildbreite. Eine « Regelung über Alles » ist ohne weiteres möglich.

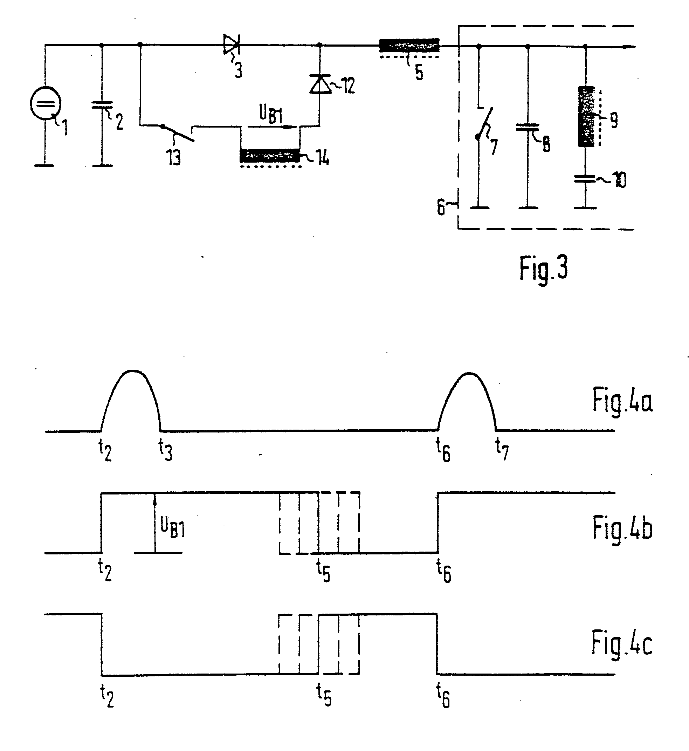

Die Schaltung entsprechend Fig. 3 stimmt weithin mit der in Fig. 1 überein. Es fehlt der Integrationskondensator 4 ; der der ersten Diode 3 parallel geschaltete Zweig ist anders ausgestaltet. Der steuerbare Halbleiterschalter 13 liegt nun in Reihe mit der zweiten Diode 12. Er kann mit dieser baulich vereinigt sein. Anstelle der Speicherdrossel 11 liegt eine zusätzliche Wicklung 14 des in jedem Fernsehempfangsgerät ohnehin vorhandenen Hochspannungstransformators. Fig. 4a stimmt mit Fig. 2a überein und zeigt die Spannung am Ablenkschalter 7. Fig. 4c zeigt die Steuerspannung des Halbleiterschalters 13 und damit auch die Zeiten, zu welchen dieser geöffnet bzw. geschlossen ist. Solange der Halbleiterschalter 13 geöffnet ist, kann nur über die erste Diode 3 ein Strom fließen. Ist der Halbleiterschalter 13 geschlossen, so kann über ihn ein zusätzlicher Strom fließen. Die Energie hierfür wird über die Wicklung 14 dem Hochspannungstransformator entnommen. Dies geschieht während des Zeilenhinlaufs, so daß in dieser Zeit die Spannung $U_{B1}$ an der Wicklung 14 konstant ist (Fig. 4b), was für die Funktion der Schaltung jedoch nicht Voraussetzung ist. Die Schaltung entsprechend Fig. 3 weist dieselben Vorteile auf, die bei der Beschreibung der Schaltung nach Fig. 1 genannt wurden. Es ist jedoch kein zusätzliches induktives Bauelement (Speicherdrossel 11) erforderlich, sondern nur eine zusätzliche Wicklung auf dem ohnehin vorhandenen Hochspannungstransformator.

**Patentanspruch**

Getaktete Speiseschaltung zur Stromversorgung eines elektrischen Verbrauchers (6), dessen zulässige Leistungsaufnahme im Bereich zwischen einem geringsten und einem höchsten Leistungswert liegt und der von einer Quelle (1) gespeist wird, deren Spannung im Bereich zwischen einem geringsten und einem höchsten Spannungswert liegt, bei der zwischen Quelle (1) und Verbraucher (6) zwei Strompfade vorhanden sind, die mindestens teilweise voneinander getrennt sind, bei dem der erste beim höchsten Spannungswert der Quelle (1) und der geringsten Leistungsaufnahme des Verbrauchers (6) gerade den benötigten Strom liefernde Strompfad (3, 5) keine Schaltmittel aufweist, und bei dem der zweite Strompfad (12, 13, 14) einen getakteten steuerbaren Halbleiterschalter (13) aufweist und bei sinkender Spannung der Quelle (1) und/oder höherer Leistungsaufnahme des Verbrauchers (6) einen zusätzlichen Strom liefert, dadurch gekennzeichnet, daß die Speiseschaltung zur Versorgung einer Horizontalablenkschaltung, beispielsweise für ein Fernsehempfangsgerät, vorgesehen ist, auf deren Hochspannungstransformator eine zusätzliche Wicklung (14) aufgebracht ist, die im zweiten Strompfad in Reihe mit dem getakteten Halbleiterschalter (13) angeordnet ist.

### Claim

Switched supply circuit for supplying power to an electric load (6) whose permissible power input lies in the range between a minimum and a maximum value and which is supplied from a source (1) whose voltage lies in the range between a minimum and a maximum value, wherein two at least partially separated current paths are present between the source (1) and the load (6), wherein the first current path (3, 5), designed to supply just the required current at the maximum voltage value of the source (1) and at the minimum power input to the load (6), contains no switching means and wherein the second current path (12, 13, 14) contains a controllable semiconductor switch (13) and supplies an additional current if the voltage of the source (1) decreases and/or the power input to the load (6) increases, characterized in that the supply circuit is designed for supplying a horizontal deflection circuit, for instance for a television receiver, on the high-voltage transformer of which there is applied an additional winding (14) which is arranged in series with the controllable semiconductor switch (13).

### Revendication

Circuit d'alimentation à découpage pour l'alimentation de puissance d'une charge électrique (6) dont la puissance d'entrée admissible se situe dans une plage comprise entre des valeurs de puissance minimale et maximale, qui est alimenté par une source (1) dont la tension se situe dans une plage comprise entre des valeurs de tension minimale et maximale, dans lequel, entre la source (1) et la charge (6), deux trajets de courant sont prévus, qui sont au moins partiellement séparés, dont le premier trajet de courant (3, 5), fournissant précisément le courant nécessaire pour la valeur de tension maximale de la source (1) et la puissance d'entrée minimale de la charge (6), ne comprend aucun moyen de commutation, et dans lequel le deuxième trajet de courant (12, 13, 14) comprend un commutateur à semi-conducteur commandé de découpage (13) et fournit un courant additionnel lorsque la tension de la source (1) diminue et/ou la puissance d'entrée de la charge (6) augmente, caractérisé en ce que le circuit d'alimentation est utilisé pour alimenter un circuit de déviation horizontale, par exemple, d'un récepteur de télévision, dont le transformateur haute tension comporte un enroulement additionnel (14) connecté en série, dans le deuxième trajet de courant, avec le commutateur de découpage à semi-conducteur (13).

Fig.1

Fig.2a

Fig.2b

Fig.2c

Fig.2d

Fig.3

Fig.4a

Fig.4b

Fig.4c